# EUROPÄISCHE PATENTSCHRIFT

(11) **EP 1 205 647 B1**
(45) Veröffentlichungstag und Bekanntmachung des Hinweises auf die Patenterteilung: **05.03.2003**
(21) Anmeldenummer: 00123966.4
(22) Anmeldetag: 03.11.2000
(51) Int. Cl.: F01N 3/023, F01N 3/28

(54) **Verfahren zur Regeneration des Partikelfilters eines Dieselmotors**
Method for regenerating the particulate filter of a Diesel engine
Procédé de régénération le filtre à particules d'un moteur Diesel

(43) Veröffentlichungstag der Anmeldung: 15.05.2002
(73) Patentinhaber: Ford Global Technologies, Inc., A subsidiary of Ford Motor Company, Dearborn, Michigan 48126 (US)
(72) Erfinder: Yasser, Mohamed Sayed Yacoub, Junkersdorf, 50858 Köln (DE); Urs, Christen, 52072 Aachen (DE); Moraal, Paul Eduard, 6291 VP Vaals (NL); Kuenstler, Johannes, 52064 Aachen (DE)
(74) Vertreter: Drömer, Hans-Carsten, Dipl.-Ing.

(56) Entgegenhaltungen:
- DE-A- 3 125 305
- DE-A- 3 408 057
- DE-A- 3 909 932
- DE-A- 4 234 841
- DE-A- 4 321 767
- US-A- 4 509 327
- US-A- 4 756 155
- US-A- 5 042 248
- US-A- 5 956 942
- PATENT ABSTRACTS OF JAPAN vol. 012, no. 134 (M-689), 23. April 1988 (1988-04-23) & JP 62 255511 A (HINO MOTORS LTD), 7. November 1987 (1987-11-07)

## Beschreibung

Die Erfindung betrifft ein Verfahren zur Regeneration eines Partikelfilters im Abgassystem eines Dieselmotors sowie einen Dieselmotor, der für die Durchführung des Verfahrens eingerichtet ist.

Partikelfilter im Abgassystem von Dieselmotoren dienen dazu, unverbrannte Rußteilchen aus dem Abgas zu entfernen. Derartige Filter müssen periodisch durch Verbrennen der angesammelten Filterrückstände regeneriert werden. Der in den Filterrückständen enthaltene Kohlenstoff zündet jedoch - sofern keine katalytische Unterstützung vorhanden ist - nur bei verhältnismäßig hohen Temperaturen von typischerweise ca. 550°C. Derartige Temperaturen werden nur unter Bedingungen hoher Belastung und hoher Motordrehzahl erreicht. Um den Betrieb des Partikelfilters sicherzustellen, müssen daher Maßnahmen getroffen werden, die Abgasteztiperatur während einer Regeneration unter allen Betriebsbedingungen des Motors auf hinreichend große Werte zu erhöhen.

Für eine derartige Erhöhung der Abgastemperaturen sind verschiedene Vorgehensweisen vorgeschlagen worden. So kann zum Beispiel durch Einschalten elektrischer Verbraucher die Motorbelastung künstlich erhöht werden, oder es kann zusätzlicher Kraftstoff in den Brennraum oder in das Abgassystem eingespritzt werden. Hierdurch werden dem Katalysator unverbrannte Kohlenwasserstoffe zugeführt, welche dann unter Erzeugung von Wärme im Katalysator umgewandelt werden. Die dabei entstehende Wärme kommt dem hinter dem Katalysator befindlichen Partikelfilter zugute.

Problematisch bei derartigen Einzelmaßnahmen ist jedoch, dass sie in komplexe gegenseitige Abhängigkeiten eingreifen, so dass je nach Betriebsbedingungen des Motors unter Umständen auch das Gegenteil des angestrebten Effektes eintreten kann. Zur Veranschaulichung der Problematik werden nachfolgend beispielhaft einige Begrenzungen und Interaktionen zwischen den verschiedenen Subsystemen für die Abgastemperaturkontrolle aufgeführt, wobei diese Liste jedoch keineswegs Anspruch auf Vollständigkeit erhebt:
i. Im Leerlauf oder bei geringer Belastung und bei einer kleinen Drehzahl des Motors kann die Abgastemperatur bei nur etwa 100°C liegen. Diese Temperatur befindet sich deutlich unterhalb der Anspringtemperatur des Katalysators, das heißt unterhalb der normalen Temperatur, bei welcher signifikante Umwandlungsraten für Kohlenwasserstoffe und CO erzielt werden. Unter derartigen Betriebsbedingungen hätte daher eine Nacheinspritzung von Kraftstoff mit dem Ziel, Kohlenwasserstoffe zum Oxidationskatalysator zu befördern, keinerlei Effekt auf die Einlasstemperatur des Partikelfilters.
ii. Bei höherer Motordrehzahl und Motorbelastung ist die Abgastemperatur hoch genug für das Ansprinden des Katalysators. Die Geschwindigkeit des Gases kann jedoch in diesem Zustand zu groß sein, so dass die Verweildauer im Katalysator nicht für eine vollständige Umwandlung der unverbrannten Kohlenwasserstoffe ausreicht.
iii. Wenn der Einlass stark gedrosselt wird, steigt das Verhältnis zwischen dem Druck im Abgaskrümmer und im Ansaugkrümmer erheblich an. Dieses Druckverhältnis verursacht den Massenstrom der Abgasrückführung (AGR), so dass der AGR-Massenstrom übermäßig wird, falls das AGR-Ventil nicht geschlossen wird.
iv. Durch die Drosselung des Motors steigen die Pumpverluste, was zu einer Reduzierung des an der Welle verfügbaren Drehmoments führt.
v. Bei höherer Motorbelastung und Drosselung des Einlasses kann das Luft-Kraftstoff-Verhältnis zu klein werden, so dass der nacheingespritzte Kraftstoff nicht mehr konvertiert werden kann oder dass kein Sauerstoff mehr für das Verbrennen des Kohlenstoffes im Partikelfilter zur Verfügung steht.
vi. Falls schließlich eine Ladedruckregelungseinrichtung durch einen Turbolader mit verstellbarer Turbinengeometrie (VTG) vorgesehen ist, beginnt der VTG zu schließen, wenn der Motor gedrosselt wird. Dies kann zu einem Überdrehen des Turboladers führen, und führt auf jeden Fall zu einem unnötigen Temperaturabfall über der Turbine.

Vor diesem Hintergrund bestand eine Aufgabe der vorliegenden Erfindung darin, ein koordiniertes Verfahren zur Regeneration des Partikelfilters eines Dieselmotors bereitzustellen, welches die Abhängigkeiten der verschiedenen Größen berücksichtigt und bei allen Betriebsbedingungen des Motors das gewünschte Ergebnis gewährleistet.

Diese Aufgabe wird durch ein Verfahren mit den Merkmalen des Anspruchs 1 gelöst. Vorteilhafte Ausgestaltungen sind in den Unteransprüchen enthalten.

Das Verfahren beruht in bekannter Weise darauf, dass die Filterrückstände durch eine Temperaturerhöhung des Abgases über die Entzündungstemperatur der Filterrückstände hinaus verbrannt werden. Das Verfahren wird in den nachfolgend aufgezählten Schritten durchgeführt.
a) Zunächst werden die für diesen Zweck geeigneten elektrischen Lasten eingeschaltet, um die Motorbelastung und damit die erzeugte Abwärme zu erhöhen. Geeignete elektrische Lasten sind zum Beispiel die Glühkerzen des Dieselmotors, die Scheibenheizung od. dgl..
b) Sodann wird das Abgasrückführungsventil geschlossen, damit später (Punkt d) gedrosselt werden kann. Gleichzeitig werden die Parameter der Voreinspritzung geeignet angepasst, um die Charakteristik des Verbrennungsgeräusches in akzeptablen Grenzen zu halten.
c) Falls eine Ladedruckregelung durch einen Turbolader mit verstellbarer Turbinengeometrie (VTG) vorhanden ist und diese rückgekoppelt so geregelt wird, dass ein bestimmter Saugrohrdruck erzielt wird, wird diese Rückkopplungsschleife geöffnet. Statt dessen kann die Basissteuerung der Turbinenregelung (feedforward) verwendet werden, oder die Position des VTG kann auf neue, kalibrierte Werte gesetzt werden.
d) Sodann wird die Frischluftzufuhr so gedrosselt, dass der Saugrohrdruck einen von der Motordrehzahl und der Motorbelastung abhängigen Wert annimmt. Dadurch wird der Luftmassenstrom reduziert, so dass dieselbe Wärmemenge auf eine geringere Abgasmenge verteilt wird. Ferner sinkt hierdurch der Motorwirkungsgrad und damit steigt die Produktion von Abwärme.
e) Die zuvor genannte Drosselung der Frischluftzufuhr wird reduziert, falls durch eine vom Fahrer vorgegebene Pedalposition des Gaspedals eine erhöhte Leistung vom Motor angefordert wird. Dies kann insbesondere als Reaktion auf ein rasches Treten des Gaspedals angezeigt sein. Auf diese Weise wird sichergestellt, dass trotz der Leistungsminderung ein akzeptables Fahrverhalten des Motors erhalten bleibt. Die Drosselung kann ferner dann reduziert werden, wenn das Luft-Kraftstoff-Verhältnis unter einen vorgegebenen Minimalwert fällt. Auf diese Weise wird sichergestellt, dass sowohl der Katalysator als auch der Partikelfilter die jeweils notwendige Menge an Sauerstoff für die dort stattfindenden chemischen Reaktionen erhalten.
f) Wenn die Kraftstoffzufuhr nicht automatisch (durch einen Leerlaufdrehzahlregler oder durch einen Geschwindigkeitsregler) kontrolliert wird, erfolgt eine Erhöhung der Kraftstoffzufuhr zur Kompensation von Verlusten und Änderungen des Verbrennungswirkungsgrades. Die Erhöhung der Kraftstoffzufuhr wird vorzugsweise als Funktion des Ansaugdruckes, der Pedalposition und/oder der Motordrehzahl implementiert.
g) Schließlich erfolgt ein Nacheinspritzen von Kraftstoff zu einem späten Zeitpunkt des Verbrennungstaktes, wenn die Betriebstemperatur des vor dem Partikelfilter angeordneten Katalysators erreicht worden ist. Hierdurch werden dem Katalysator unverbrannte Kohlenwasserstoffe zugeführt, welche dann unter Erzeugung von Wärme im Katalysator umgewandelt werden. Die dabei entstehende Wärme kommt dem hinter dem Katalysator befindlichen Partikelfilter zugute. Die nacheingespritzte Kraftstoffmenge kann gesteigert werden, wenn die Temperatur des Katalysators ansteigt. Der Motor sollte jedoch weiterhin gedrosselt bleiben.

Durch das oben erläuterte koordinierte Einsetzen verschiedener Maßnahmen wird unter verschiedenen Betriebsbedingungen des Motors die gewünschte Erhöhung der Abgastemperatur sicher erreicht, wobei unbeabsichtigte und unkontrollierte gegenteilige Effekte vermieden werden.

Wenngleich die vorstehend beschriebene Abfolge der Schritte eine bevorzugte Abfolge darstellt, kann die Abfolge der Schritte im Rahmen der Erfindung variiert werden oder es können verschiedene Schritte gleichzeitig oder quasi gleichzeitig ausgeführt werden. Dies betrifft insbesondere die Bedingungen für die die Temperaturerhöhung einstellenden Schritte a) bis c).

Mit dem Nacheinspritzen von Kraftstoff in Schritt g) wird gewartet, bis die Temperatur des Katalysators oberhalb der Minimaltemperatur liegt, ab welcher eine katalytische Umwandlung stattfindet. Anstelle des reinen Abwartens kann das Erreichen der Katalysatortemperatur auch dadurch beschleunigt werden, dass ein Nacheinspritzen von Kraftstoff zeitnah zur Haupteinspritzung gemäß Schritt f) solange durchgeführt wird, bis der Katalysator seine Betriebstemperatur erreicht hat.

Dabei muss die Haupteinspritzung reduziert werden, um ein Überschiessen des Drehmomentes zu vermeiden.

Die Erhöhung der Kraftstoffzufuhr in Schritt f) kann zum Beispiel dadurch erfolgen, dass auf die Basisstrategie der Kraftstoffzufuhr ein Multiplikationsfaktor angewendet wird, welcher von der Motordrehzahl und/oder dem Ansaugdruck abhängt. Die Werte dieses Multiplikationsfaktors können für einen bestimmten Motortyp im Rahmen eines Motortests festgestellt und in Tabellenspeichern abgelegt werden.

Das in Schritt g) durchgeführte Nacheinspritzen von Kraftstoff erfolgt vorteilhafterweise etwa bei 100° nach dem oberen Totpunkt.

Nachdem in Schritt g) ein Zustand erreicht ist, bei dem der Motor mit verringerter Effizienz und damit erhöhter Abwärmeproduktion arbeitet und bei dem zusätzlich Wärme im Katalysator vor dem Partikelfilter produziert wird, wird dieser erreichte Zustand vorzugsweise so lange aufrecht erhalten, bis alle Filterrückstände im Partikelfilter verbrannt sind, oder bei sich selbst erhaltender Reaktion, bis die Reaktion sicher in Gang gesetzt ist.

Dabei werden die verschiedenen beeinflussbaren Größen wie insbesondere die Abgasrückführung, der Ansaugdruck, die Kraftstoffzufuhr und/oder die Nacheinspritzung vorzugsweise so geregelt, dass zur Verbrennung der Filterrückstände eine ausreichend hohe Temperatur im Partikelfilter aufrecht erhalten wird, und dass andererseits das vom Fahrer geforderte Drehmoment bereitgestellt wird, so dass sich das Fahrverhalten nicht spürbar verschlechtert.

Vorzugsweise werden dabei ferner die Abgasrückführung, der Ansaugdruck, die Kraftstoffzufuhr und/oder die Nacheinspritzung so geregelt, dass das Luft-Kraftstoff-Verhältnis oberhalb eines gegebenen Minimalwerts bleibt. Dieser Minimalwert liegt oberhalb der Stöchiometrie, damit im Partikelfilter noch Sauerstoff für die Verbrennung der Filterrückstände zur Verfügung steht.

Gemäß einer Weiterbildung des zuletzt genannten Vorgehens erfolgt dabei die Drosselung des Ansaugdruckes oszillierend, so dass das Luft-Kraftstoff-Verhältnis ebenfalls oszillierend den genannten Minimalwert überschreitet. Dieses Vorgehen bietet sich dann an, wenn bei gegebenen Betriebsbedingungen des Motors die erforderliche Temperatur nicht bei gleichzeitiger Aufrechterhaltung der minimalen Sauerstoffkonzentration stromabwärts des Katalysators erreicht werden kann. In diesem Falle wird der Motor periodisch gedrosselt, um die geforderte Temperatur zu erreichen. Die dabei erzeugte Wärme wird in allen Teilen des Abgasweges gespeichert. Durch ebenfalls periodisch stattfindende Öffnungsvorgänge der Drosselklappe wird gleichzeitig ausreichend Sauerstoff für die Verbrennung im Partikelfilter zur Verfügung gestellt, wobei aufgrund der thermischen Trägheit des Systems die Abgastemperatur ausreichend hoch bleibt, wenn die Intervalle der Drosselöffnung hinreichend kurz gewählt werden.

Während der Verbrennung der Filterrückstände in Schritt g) beziehungsweise nach diesem Schritt wird ferner - ähnlich wie in Schritt f) - die Drosselung der Frischluftzufuhr reduziert, wenn die gewünschte Motordrehzahl nicht aufrecht erhalten werden kann oder wenn vom Fahrer eine Beschleunigung angefordert wird. Die Berücksichtigung der Drehmomentanforderung des Fahrers kann durch ein einseitig (nur für positive Beschleunigung) wirkendes Differentialfilter für die Pedalposition erreicht werden.

Die Erfindung betrifft ferner einen Dieselmotor mit einer Abgasrückführung, einem Katalysator sowie einem im Abgassystem hinter dem Katalysator angeordneten Partikelfilter und mit einer Steuereinrichtung zur Regeneration des Partikelfilters durch Erhöhung der Abgastemperatur. Die Steuereinrichtung ist dabei so ausgestaltet und so mit Sensoreingängen sowie Ausgängen zu Aktuatoren verbunden, dass sie ein Verfahren der oben erläuterten Art durchführen kann.

Im Folgenden wird die Erfindung anhand der Figuren beispielhaft näher erläutert. Es zeigen:
- Fig. 1: schematisch die bei der Durchführung des Verfahrens beteiligten Komponenten eines Dieselmotors;
- Fig. 2: ein Flussdiagramm des Regelungsalgorithmus für die Abgastemperatur;
- Fig. 3: ein Blockdiagramm der Regelungsstrategie für die Abgastemperatur.

In Figur sind die für die vorliegende Erfindung wesentlichen Komponenten eines Dieselmotors schematisch dargestellt. Über einen Kompressor 1 wird Luft angesaugt und verdichtet dem Dieselmotor 5 über dessen Ansaugkrümmer zur Verfügung gestellt. Im Luftweg vom Kompressor zum Dieselmotor 5 sitzt dabei eine Einlassdrossel 2. In die Zylinder des Dieselmotors 5 wird über Kraftstoffinjektoren 6 Kraftstoff eingespritzt und zusammen mit der Luft verbrannt. Die dabei entstehenden Abgase verlassen den Dieselmotor über den Abgaskrümmer 7.

Ein Teil dieser Abgase wird über eine Abgasrückführung zur Eingangsseite des Dieselmotors zurückgeführt. Diese Abgasrückführung führt über einen AGR-Kühler 4 sowie ein AGR-Ventil 3. Über das AGR-Ventil 3 kann das Ausmaß der Abgasrückführung kontrolliert werden.

Der nicht rückgeführte Teil der Abgase strömt über eine Turbine 8 mit Möglicherweise variabler Geometrie (VTG), welche durch den Abgasstrom in Drehung versetzt wird und ihrerseits den Kompressor 1 antreibt. Die Abgase fließen dann weiter in eine Abgasreinigungeinrichtung, welche aus einem Oxidationskatalysator 9 und einem in Strömungsrichtung dahinter gelegenen Partikelfilter 10 besteht.

Zur Reinigung des Partikelfilters 10 von Kohlenstoffrückständen ist es bekannt, die Abgastemperatur so weit zu erhöhen, dass die Rückstände verbrennen. Für die Erhöhung der Abgastemperatur kommen im Wesentlichen drei Maßnahmen in Frage. Hierzu gehört zum einen die Reduzierung des Gasstromes durch den Motor, wodurch weniger Luft mit einer gegebenen Menge an während der Verbrennung freigesetzter Wärme erhitzt wird. Zweitens kann die Motoreffizienz verringert werden, so dass mehr Energie für dieselbe mechanische Leistung verbraucht wird. Drittens können unverbrannte Kohlenwasserstoffe bereitgestellt werden, welche im Katalysator 9 unter exothermer Wärmeerzeugung umgewandelt werden.

Der Fluss des Abgases wird durch Drosselung der Ansaugluftmenge reduziert (Einlassdrossel 2). Dies führt gleichzeitig zu erhöhten Pumpverlusten. Die Effizienz des Motors kann weiter dadurch verringert werden, dass die Lichtmaschine mit hohen elektrischen Lasten beaufschlagt wird.

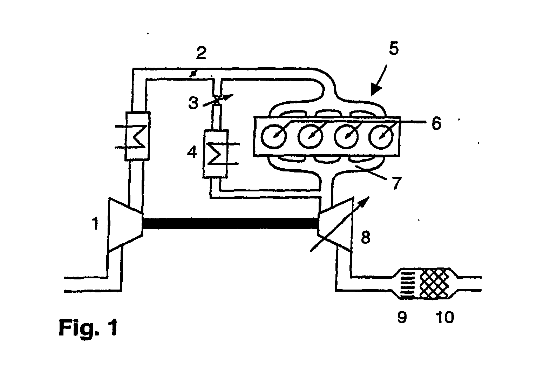

Die oben genannten Kohlenwasserstoffe können entweder durch Injektion von zusätzlichem Kraftstoff in alle oder in einige Zylinder nach der Haupteinspritzung bereitgestellt werden (Nacheinspritzung) oder durch direkte Einspritzung von Kraftstoff in die Abgasleitungen oberhalb des Katalysators 9. Falls der Motor - wie in Figur 1 dargestellt - mit einer Turbine variabler Geometrie (VTG) 8 ausgestattet ist, kann die Flussrate und die Effizienz auch durch eine Veränderung der VTG-Position verändert werden.

Damit die aufgezählten Maßnahmen erfolgreich sind, müssen sie jedoch sorgfältig koordiniert werden. Insbesondere müssen sie in der richtigen Reihenfolge gestartet werden, und sie dürfen nicht miteinander konkurrieren oder sich gegenseitig beziehungsweise andere Teile der normalen Motorkontrolle stören.

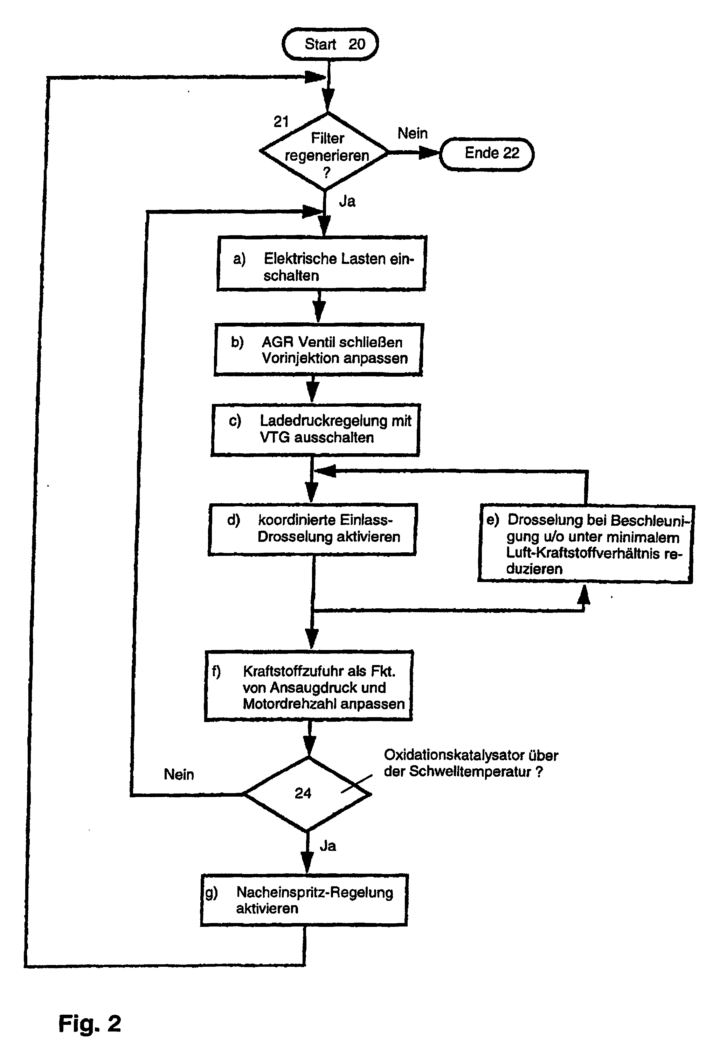

Figur 2 zeigt diesbezüglich die erfindungsgemäße Regelungsstrategie in einem Flussdiagramm. Mit dieser Strategie wird eine Koordination der verschiedenen Maßnahmen erreicht, welche zu einer effizienten Regeneration des Partikelfilters führt, die robust ist und keine für den Fahrer wahrnehmbaren Veränderungen des Fahrverhaltens zur Folge hat.

Die in Figur 2 dargestellte Strategie beginnt nach ihrem Start 20 mit einer Entscheidung im Block 21, ob eine Regeneration des Partikelfilters erforderlich ist oder nicht. Verfahren zur Entscheidung dieser Frage sind bekannt und werden daher im Rahmen der vorliegenden Erfindung nicht weiter erläutert. Wenn die Entscheidung negativ ausfällt, wird der Algorithmus mit Block 22 unmittelbar wieder verlassen.

Soll dagegen eine Regeneration des Partikelfilters stattfinden, so werden in Schritt a) zunächst alle hierfür geeigneten elektrischen Verbraucher eingeschaltet, um die Motorbelastung und damit die Produktion von Abwärme zu erhöhen. Dabei wird die Batteriespannung ständig beobachtet. Sollte sie unter einen unteren Grenzwert fallen, werden die elektrischen Verbraucher wieder ausgeschaltet. Auf Grund der niedrigen Batteriespannung wird die Lichtmaschinen jedoch weiterhin den Motor zusätzlich belasten, um die Batterie wieder aufzuladen. Sobald die Nominalbatteriespannung erreicht ist, werden die genannten elektrischen Verbraucher wieder eingeschaltet.

Als nächstes wird in Schritt b) das AGR-Ventil 2 geschlossen. Gleichzeitig wird die Voreinspritzung angepasst, damit die Verbrennungsgeräusche auf einem akzeptablen Niveau bleiben.

Im nächsten Schritt c) wird die Ladedruckregelung mit einer Turbine variabler Geometrie (VTG Boost Pressure Control) außer Kraft gesetzt, falls eine solche vorhanden ist und nur die Steuerung beibehalten.

Anschließend wird in Schritt d) eine koordinierte Drosselung der Einlassluftmenge veranlaßt. Über die Rückkopplungsschleife e) kann diese Drosselung reduziert werden, wenn durch den Fahrer eine Beschleunigung des Kraftfahrzeuges angefordert oder wenn ein minimales Luft-Kraftstoff-Verhältnis unterschritten wird.

In Schritt f) wird die Basis-Kraftstoffzufuhr als Funktion des Ansaugdruckes und der Motordrehzahl angepasst.

Anschließend wird in Block 24 überprüft, ob die Temperatur des Oxidationskatalysators 9 oberhalb eines Schwellwerts liegt oder nicht. Falls sie nicht oberhalb des Schwellwertes liegt, springt das Verfahren zurück zu Schritt a).

Hat der Katalysator 9 dagegen seine Arbeitstemperatur erreicht, so wird in Schritt g) die Nacheinspritzungsregelung aktiviert.

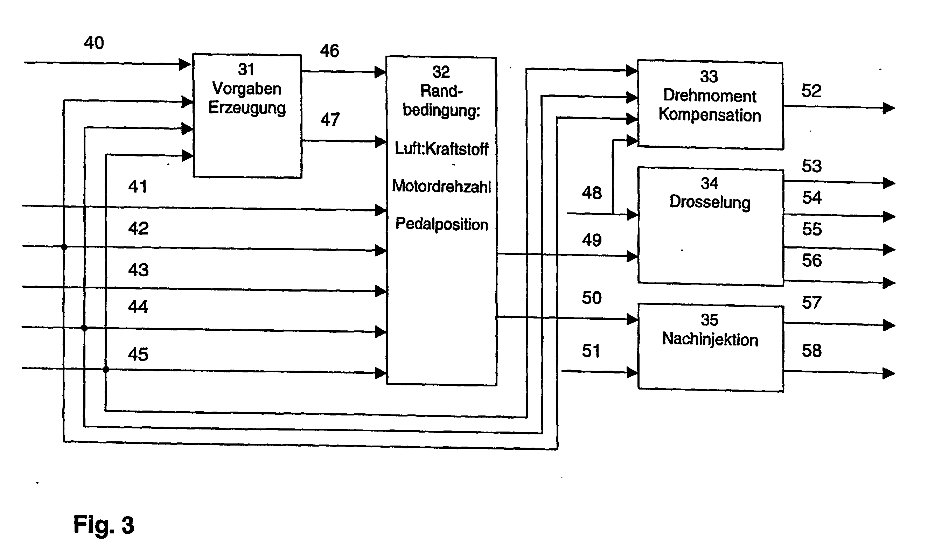

In Figur 3 sind die für einen erfindungsgemäßen Abgastemperaturregler wesentlichen Komponenten und Verbindungen zwischen den Subsystemen, den Sensoren und den Aktuatoren dargestellt. In einem Subsystem 31 werden ein Zielwert 46 für den Ansaugdruck und die maximale Menge 47 für das Nacheinspritzen festgesetzt. Eingangsgrößen sind dabei die Temperatur 40 des Partikelfilters, die Motordrehzahl 42 und die Pedalposition 45 des Gaspedals.

In einem Subsystem 32 werden begrenzende Randbedingungen berücksichtigt. Hierzu gehört insbesondere das Luft-Kraftstoff-Verhältnis 41, die Motordrehzahl und eine Änderung der Pedalposition. Eingangsgrößen des Subsystems 32 sind die Ausgänge 46 (gewünschter Saugrohrdruck) und 47 (maximale Nacheinspritzmenge) des Subsystems 31 sowie Signalleitungen betreffend das Luft-Kraftstoff-Verhältnis 41, die Motordrehzahl 42, die gewünschte Motordrehzahl 43, ein Geschwindigkeitsregelungsflag 44 sowie die Pedalposition 45.

Ausgangsseitig gibt das Subsystem 32 den gewünschten Saugrohrdruck 49 sowie die maximale Nacheinspritzmenge 50 weiter, welche gegebenenfalls aufgrund der Randbedingungen modifiziert wurden. Der gewünschte Saugrohrdruck 49 wird an ein Drosselungssubmodul 34 weitergeleitet, welches aus diesem Wert sowie aus dem tatsächlichen Saugrohrdruck 48 Signale für die AGR-Ventilposition 53, die Einlassdrosselposition 54, die Voreinspritzung 55 sowie für ein Flag 56 zur Abschaltung der VTG-Rückkopplung liefert.

Die maximale Nacheinspritzmenge 50 wird an ein Subsystem 35 zur Nacheinspritzung weitergeleitet, welches ferner ein Signal 51 über die Katalysatortemperatur erhält. Als Ausgangsgrößen gibt das Subsystem 35 die Nacheinspritzmenge 57 sowie die Zeitsteuerung 58 für das Nacheinspritzen ab.

Weiterhin ist ein Subsystem 33 für die Kompensation von Drehmomentverlusten vorgesehen. Dieses erhält eingangsseitig Signale über die Pedalposition 45, ein Geschwindigkeitsregelungsflag 44, die Motordrehzahl 42 sowie den Saugrohrdruck 48. Ausgangsseitig gibt das Subsystem 33 ein Signal 52 ab, welches die zusätzliche Kraftstoffzufuhr für die Haupteinspritzung bestimmt.

Die Bezugsziffern der Größen von Figur 3 sind nachfolgend noch einmal zusammengestellt:

### Bezugszeichenliste zu Fig. 3

- 40: Filtertemperatur
- 41: Luft-Kraftstoff-Verhältnis
- 42: Motordrehzahl
- 43: gewünschte Motordrehzahl
- 44: Geschwindigkeitsregelungsflag
- 45: Pedalposition
- 46: gewünschter Saugrohrdruck
- 47: maximale Nacheinspritzmenge
- 48: Saugrohrdruck
- 49: gewünschter Saugrohrdruck
- 50: maximale Nacheinspritzmenge
- 51: Katalysatortemperatur
- 52: zusätzliche Hauptkraftstoffzufuhr
- 53: AGR Ventilposition
- 54: Einlassdrosselposition
- 55: Voreinspritzung
- 56: Flag zum Abschalten der VTG-Rückkopplung
- 57: Nacheinspritzmenge
- 58: Nacheinspritz-Zeitsteuerung

## Patentansprüche

1. Verfahren zur Motorsteuerung während der Regeneration eines Teilchenfilters (10) im Abgassystem eines Dieselmotors (5), wobei Filterrückstände durch eine Temperaturerhöhung verbrannt werden, enthaltend folgende Schritte:
a) Einschalten elektrischer Verbraucher, um die Motorbelastung zu erhöhen;
b) zumindest teilweises Schließen des Abgasrückführungsventils (3) bei gleichzeitiger Anpassung der Voreinspritzung, um die Abgasflussrate bei akzeptablem Verbrennungsgeräusch zu reduzieren;
c) Abstellen der Rückkopplung der Ladedruckregelung mit verstellbarer Turbinengeometrie (8), falls eine solche vorhanden ist,
d) Drosseln der Frischluftzufuhr zur Einstellung des Ansaugdruckes auf einen von Drehzahl und Belastung abhängigen Wert;
wobei die Schritte a) bis c) gleichzeitig oder in beliebiger Reihenfolge vorgenommen werden;
e) Reduzieren der Drosselung zur Erhöhung des Ansaugdruckes, wenn durch die Pedalposition eine erhöhte Leistung vom Motor angefordert wird und/oder wenn das Luft-Kraftstoff-Verhältnis unter einen vorgegebenen Minimalwert oberhalb der Stöchiometrie abfällt, damit im Teilchenfilter noch Sauerstoff für die Verbrennung der Filterrückstände ankommt;
f) Erhöhen der Kraftstoffzufuhr in Abhängigkeit vom Ansaugdruck, der Pedalposition und/oder der Motordrehzahl, falls die Kraftstoffzufuhr nicht anderweitig automatisch geregelt wird;
g) spätes Nacheinspritzen von Kraftstoff Verbrennungstakt, wenn die Betriebstemperatur eines vor dem Teilchenfilter (10) angeordneten Katalysators (9) erreicht worden ist.

2. Verfahren nach Anspruch 1,
**gekennzeichnet durch** ein nach Schritt f) vorgenommenes Nacheinspritzen von Kraftstoff zeitnah zur Haupteinspritzung bis zum Erreichen der Betriebstemperatur des Katalysators (9).

3. Verfahren nach einem der Ansprüche 1 oder 2,
**dadurch gekennzeichnet, dass** in Schritt f) die Erhöhung der Kraftstoffzufuhr durch Berücksichtigung eines von der Motordrehzahl und/oder dem Saugrohrdruck abhängigen Multiplikationsfaktors erfolgt.

4. Verfahren nach einem der Ansprüche 1 bis 3,
**dadurch gekennzeichnet, dass** in Schritt g) das Nacheinspritzen von Kraftstoff bei einem Kurbelwellenwinkel von etwa 100° nach dem oberen Totpunkt erfolgt.

5. Verfahren nach einem der Ansprüche 1 bis 4,
**dadurch gekennzeichnet, dass** der nach Schritt g) erreichte Zustand solange aufrecht erhalten wird, bis die Filterrückstände verbrannt sind.

6. Verfahren nach Anspruch 5,
**dadurch gekennzeichnet, dass** Abgasrückführung, Saugrohrdruck, Kraftstoffzufuhr und/oder Nacheinspritzung so geregelt werden, dass zur Verbrennung der Filterrückstände eine ausreichend hohe Temperatur im Filter aufrecht erhalten wird, und dass das geforderte Drehmoment vom Motor bereitgestellt wird.

7. Verfahren nach Anspruch 5 oder 6,
**dadurch gekennzeichnet, dass** Abgasrückführung, Saugrohrdruck, Kraftstoffzufuhr und/oder Nacheinspritzung so geregelt werden, dass das Luft-Kraftstoff-Verhältnis oberhalb eines Minimalwerts bleibt.

8. Verfahren nach Anspruch 7,
**dadurch gekennzeichnet, dass** die Drosselung der Frischluftzufuhr oszillierend erfolgt, so dass das Luft-Kraftstoff-Verhältnis oszillierend einen Minimalwert über- und unterschreitet.

9. Dieselmotor (5) mit
- elektrischen Verbräuchern,
- einer Abgasrückführung, die ein Abgasrückführungsventil (3) enthält,
- gegebenenfalls einer Ladedruckregelung mit verstellbarer Turbinengeometrie (8),
- einer Luftzufuhr mit einer Einlassdrossel (2),
- einem Gaspedal,
- einem Sensor für das Luft-Kraftstoff-Verhältnis (41),
- einem Kraftstoffinjektor (6),
- einem Katalysator (9) und einem im Abgasweg stromabwärts hiervon angeordneten Teilchenfilter (10),
- einem Sensor für die Temperatur (51) des Katalysators (9),
- einer Steuereinrichtung zur Regeneration des Teilchenfilters durch Erhöhung der Abgastemperatur, wobei die Steuereinrichtung so ausgestaltet und so mit den genannten Sensoren sowie Aktuatoren verbunden ist, dass sie ein Verfahren nach einem der Ansprüche 1 bis 8 durchführen kann.

## Claims

1. Method for engine control during the regeneration of a particle filter (10) in the exhaust system of a diesel engine (5), filter residues being burnt as a result of an increase in temperature, involving the following steps:
a) switching-on of electrical consumers in order to increase the engine load;
b) at least partial closing of the exhaust-gas recirculation valve (3), at the same time with the adaptation of preinjection, in order to reduce the exhaust-gas flow rate, whilst ensuring an acceptable combustion noise;
c) switching-off of the feedback of the boost-pressure control with adjustable turbine geometry (8), if such is present,
d) throttling of the fresh-air supply in order to set the intake pressure at a value dependent on rotational speed and load;
steps a) to c) being carried out simultaneously or in any desired sequence;
e) reduction in the throttling in order to increase the intake pressure when an increased power is demanded from the engine by the pedal position and/or when the air/fuel ratio falls below a predetermined minimum value above the stoichiometric value, so that oxygen for the combustion of the filter residues still arrives in the particle filter;
f) increase in the fuel supply as a function of the intake pressure, of the pedal position and/or of the engine rotational speed if the fuel supply is not otherwise regulated automatically;
g) late reinjection of fuel in the ignition stroke when the operating temperature of a catalytic converter (9) arranged upstream of the particle filter (10) has been reached.

2. Method according to Claim 1, **characterized by** a reinjection of fuel, carried out after step f), near the time of main injection, until the operating temperature of the catalytic converter (9) is reached.

3. Method according to one of Claims 1 and 2, **characterized in that**, in step f), the increase in the fuel supply takes place **in that** a multiplication factor dependent on the engine rotational speed and/or on the suction-pipe pressure is taken into account.

4. Method according to one of Claims 1 to 3, **characterized in that**, in step g), the reinjection of fuel takes place at a crankshaft angle of about 100° after top dead centre.

5. Method according to one of Claims 1 to 4, **characterized in that** the state reached after step g) is maintained until the filter residues are burnt.

6. Method according to Claim 5, **characterized in that** exhaust-gas recirculation, suction-pipe pressure, fuel supply and/or reinjection are regulated in such a way that a sufficiently high temperature for the combustion of the filter residues is maintained in the filter, and **in that** the required torque is provided by the engine.

7. Method according to Claim 5 or 6, **characterized in that** exhaust-gas recirculation, suction-pipe pressure, fuel supply and/or reinjection are regulated in such a way that the air/fuel ratio remains above a minimum value.

8. Method according to Claim 7, **characterized in that** the throttling of the fresh-air supply takes place in an oscillating manner, so that the air/fuel ratio overshoots and undershoots a minimum value in an oscillating manner.

9. Diesel engine (5) with
- electrical consumers,
- exhaust-gas recirculation which contains an exhaust-gas recirculation valve (3),
- if appropriate, a boost-pressure control with adjustable turbine geometry (8),
- an air supply with an inlet throttle (2),
- an accelerator pedal,
- a sensor for the air/fuel ratio (41),
- a fuel injector (6),
- a catalytic converter (9) and a particle filter (10) arranged downstream of the latter in the exhaust-gas path,
- a sensor for the temperature (51) of the catalytic converter (9),
- a control device for regenerating the particle filter by an increase in the exhaust-gas temperature, the control device being designed and being connected to the said sensors and actuators in such a way that it can carry out a method according to one of Claims 1 to 8.

## Revendications

1. Procédé de commande du moteur pendant la régénération d'un filtre à particules (10) dans le système de gaz d'échappement d'un moteur diesel (5), dans lequel des résidus du filtre sont brûlés par une augmentation de température, comprenant les étapes suivantes :
a) branchement d'un consommateur électrique afin d'augmenter la charge du moteur ;
b) fermeture au moins partielle de la soupape de reflux des gaz d'échappement (3) avec adaptation simultanée de la pré-injection, afin de réduire le débit des gaz d'échappement pour un bruit de combustion acceptable ;
c) arrêt de la rétroaction de la régulation de la pression de charge avec géométrie de turbine réglable (8) le cas échéant,
d) étranglement de l'alimentation en air frais pour l'ajustement de la pression d'aspiration à une valeur dépendant du régime et de la charge ;
les étapes a) à c) étant réalisées en même temps ou suivant une séquence quelconque ;
e) réduction de l'étranglement pour augmenter la pression d'aspiration lorsqu'une puissance accrue est exigée du moteur par la position de la pédale et/ou lorsque le rapport air-carburant tombe sous une valeur minimale prédéfinie au-dessus de la stoechiométrie, afin qu'il arrive encore de l'oxygène dans le filtre à particules en vue de la combustion des résidus du filtre ;
f) augmentation de l'alimentation en carburant en fonction de la pression d'aspiration, de la position de la pédale et/ou du régime du moteur, au cas où l'alimentation en carburant n'est pas régulée automatiquement d'une autre façon ;
g) post-injection ultérieure de carburant dans la phase de combustion, lorsque la température de fonctionnement d'un catalyseur (9) disposé avant le filtre à particules (10) est atteinte.

2. Procédé selon la revendication 1, **caractérisé par** une post-injection de carburant réalisée après l'étape f), au moment de l'injection principale, jusqu'à atteindre la température de fonctionnement du catalyseur (9).

3. Procédé selon l'une quelconque des revendications 1 ou 2, **caractérisé en ce que** l'augmentation de l'alimentation en carburant dans l'étape f) s'effectue en tenant compte d'un facteur de multiplication dépendant du régime du moteur et/ou de la pression du tube d'aspiration.

4. Procédé selon l'une quelconque des revendications 1 à 3, **caractérisé en ce que** la post-injection de carburant dans l'étape g) s'effectue pour un angle de vilebrequin d'environ 100° après le point mort haut.

5. Procédé selon l'une quelconque des revendications 1 à 4, **caractérisé en ce que** l'état atteint après l'étape g) est maintenu jusqu'à ce que les résidus du filtre soient brûlés.

6. Procédé selon la revendication 5, **caractérisé en ce que** le reflux des gaz d'échappement, la pression du tube d'aspiration, l'alimentation en carburant et/ou la post-injection sont régulés de telle sorte que pour la combustion des résidus du filtre une température suffisamment élevée soit maintenue dans le filtre et que le couple nécessaire soit fourni par le moteur.

7. Procédé selon la revendication 5 ou 6, **caractérisé en ce que** le reflux des gaz d'échappement, la pression du tube d'aspiration, l'alimentation en carburant et/ou la post-injection sont régulés de telle sorte que le rapport air-carburant reste au-dessus d'une valeur minimale.

8. Procédé selon la revendication 7, **caractérisé en ce que** l'étranglement de l'alimentation en air frais s'effectue de manière oscillante, de sorte que le rapport air-carburant oscille au-dessus et en dessous d'une valeur minimale.

9. Moteur diesel (5) comprenant :
- des consommateurs électriques,
- un reflux de gaz d'échappement qui contient une soupape de reflux de gaz d'échappement (3),
- éventuellement une régulation de la pression de charge avec une géométrie de turbine réglable (8),
- une alimentation en air avec un étranglement d'entrée (2),
- une pédale d'accélérateur,
- un capteur pour le rapport air-carburant (41),
- un injecteur de carburant (6),
- un catalyseur (9) et un filtre à particules (10) disposé en aval de celui-ci dans la trajectoire des gaz d'échappement,
- un capteur pour la température (51) du catalyseur (9),
- un dispositif de commande pour la régénération du filtre à particules par augmentation de la température des gaz d'échappement, le dispositif de commande étant configuré de telle sorte et étant connecté de telle sorte aux capteurs et aux actionneurs mentionnés, qu'il puisse réaliser un procédé selon l'une quelconque des revendications 1 à 8.
